(19) Europäisches Patentamt / European Patent Office / Office européen des brevets

(11) **EP 4 060 784 A1**

(12) **EUROPEAN PATENT APPLICATION**

(43) Date of publication:
**21.09.2022   Bulletin 2022/38**

(21) Application number: **21163029.8**

(22) Date of filing: **17.03.2021**

(51) International Patent Classification (IPC):
$H01M\ 10/42^{(2006.01)}$   $H01M\ 10/44^{(2006.01)}$
$H01M\ 16/00^{(2006.01)}$   $B60L\ 58/18^{(2019.01)}$
$H02J\ 1/10^{(2006.01)}$   $H02J\ 7/00^{(2006.01)}$
$G06N\ 3/00^{(2006.01)}$   $G06N\ 3/08^{(2006.01)}$
$G06N\ 7/00^{(2006.01)}$   $H01M\ 10/48^{(2006.01)}$

(52) Cooperative Patent Classification (CPC):
**G06N 3/006; B60L 58/18; G06N 3/08; G06N 7/005;
H01M 10/425; H01M 10/441; H01M 16/00;
H02J 1/106; H02J 7/00032; H02J 7/0013;
H02J 7/0063;** H01M 10/482; H01M 16/003;
H01M 16/006; H01M 2010/4271;        (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
• **FINK, Olga**
  **8405 Winterthur (CH)**
• **TIAN, Yuan**
  **8049 Zürich (CH)**

(54) **POWER MANAGEMENT METHOD FOR MULTIPLE POWER SOURCE SYSTEMS**

(57)    The present invention concerns a computer-implemented method for power management between a plurality of power sources using reinforcement learning, comprising the steps of receiving input data in real-time for a plurality of individual power sources of a multi-power source system, using a trained allocation policy, which is trained with a reinforcement learning algorithm to optimise a predefined objective and which is parametrized by weights, to distribute power demand to the individual power sources of the multi-power source system in real-time. Preferably the distribution policy is a Dirichlet distribution policy. The invention also concerns a device having a processor performing said method.

Fig. 1

**(Cont. next page)**

EP 4 060 784 A1

(52) Cooperative Patent Classification (CPC): (Cont.)
   H01M 2010/4278; H02J 7/00712

**Description**

**Technical domain**

The present invention concerns a method for power management of multi-power source systems, including multi-battery systems.

**Background and Related art**

Multi-power source configurations, such as for example a combination of ultra-capacitors or fuel cells with batteries, have become widespread in different applications. The performance and reliability of these systems critically relies on the individual health states of each of its power sources. However, the power management for these complex systems and the power distribution between its individual power sources remains a major challenge today.

A major challenge of power management strategies for multi-power source systems has been the design of optimal power distribution strategies that take distinct observed states into account and consider different dynamics.

The complexity faced by multi-power source systems is also encountered in multi-battery systems. It is worth mentioning that batteries generally have a relatively complex working dynamic, which is also a challenging case study by which to evaluate the general performance of a power management strategy.

The discharge cycles of batteries are strongly determined by the state of charge (SOC) or the state of health (SOH) of the battery, the applied power, the temperature, and are also significantly influenced by the degradation dynamics.

The prolongation of the discharge cycles and lifetimes of batteries in multiple battery systems, has also been a long-standing challenge. Upon use, the SOH and remaining useful life (RUL) differs between individual batteries of the multiple battery system. Small differences early on can be rapidly amplified during deployment of the system.

Batteries in second life applications pose a particular challenge on the power management systems. Batteries which are removed from battery-powered systems with high requirements still often have a good energy storage capacity. Therefore, these batteries can still be applied in less demanding applications. The degraded discharge dynamics of such second-life batteries are typically determined by their usage profile in the first life and are typically very dissimilar within a multi-battery system.

Once any of the individual batteries reaches its end of discharge (EOD), the operation of the entire multi-battery system is impaired. In the worst case, an early drop-out of a single battery causes the entire system to switch off and the device it supplies to crash. Since individual batteries of the system discharge at different rates, the reliability of the entire system decreases over its lifetime.

This reduced reliability is a major problem for systems using multi-power sources. This is particularly true for autonomous systems, such as driverless vehicles, or drones, where consequences of fluctuations or failure in energy supply may have severe and even life-threatening consequences.

In order to prolong the working cycle of the entire system, and, therefore, its lifetime, different strategies have been pursued to optimise the power management strategy of load demand between the individual sources of the system.

The most commonly used approaches for power management between individual power sources are rule-based methods, planning-based methods or are simply based on equal load distribution.

However, rule-based methods require extensive prior knowledge and concise information pertaining the conditions under which the system is used. For example, in a multiple battery system, the SOC and/or SOH input information of the individual batteries is required.

Retrieval of this kind of information on the basis of which a rule can be defined requires extensive experimentation. These methods are, therefore, extremely difficult to scale up.

Planning-based methods normally need model information and future load profile. Thus, they are vulnerable to uncertainty and changes in scheduled operations and noise. This is particularly problematic for autonomous systems, which are frequently exposed to unexpected changes. Besides, planning-based methods normally require a relatively long optimization time, which is not suitable for real-time decision making.

Document EP3262734B1 discloses a computer-implemented method for allocating power among multiple batteries of a device. The method requires that the power being consumed by the device is determined and that the efficiency of at least some batteries of the system is calculated. The management of the power is then determined based on this information.

More recently, the usefulness of machine-learning methods, such as reinforcement-learning based methods, for energy systems has been investigated.

Yu Sui and Shiming Song, Energies 2020, 13, 1982 disclose a reinforcement learning framework for solving battery scheduling problems. However, the described method does not provide a solution for load allocation to individual batteries in system supplied by multiple batteries.

Xiong Rui et al, Applied Energy 211 (2018), 538-548, disclose a reinforcement learning-based real-time power management method for hybrid energy storage systems. However, the described method only supports two elements with a fixed load profile and is not suited for more complex systems.

Despite these different approaches, the problem of power management for multi-power source systems has still not been sufficiently addressed to this day. The optimization speed of existing approaches is, typically, too slow to adapt to changing conditions and/or differing discharge levels of individual batteries adequately and in a timely manner.

Besides, the approaches mentioned above often require processed system state estimations. For example, the battery cases mentioned above, the input requires the information relating to SOC or SOH.

Because of these limitations, a proactive, real-time, end-to-end, and effective power management strategy of multi-power source systems, has remained an unsolved problem.

In addition, existing approaches are ill-equipped to deal with the increasing complexity of power management, originating for example from an increase in number of individual sources in multi-power source systems. The currently known methods are insufficient for adequate power management to three or more sources, to the extent that the reliability and/or durability of the systems is drastically decreased.

**Short disclosure of the invention**

An aim of the present invention is the provision of a method for power management of multi-power source systems, such as a fuel cell combined with a battery system or a multiple battery system, that overcomes the shortcomings and limitations of the state of the art.

The method should enhance the reliable performance of the multi-power source system. The method should be robust and dynamically adapt to load demand. The method should also be scalable.

It is a further aim of the invention to prolong the lifetime of the multi-power system, thereby improving its sustainability.

It is another aim of the invention that the method should be transferable to systems with different dynamics.

According to the invention, these aims are attained by the object of the attached claims, and especially by independent claims.

In particular, the aims are achieved by a computer-implemented method for power management between a plurality of power sources using reinforcement learning, comprising the steps of

receiving input data in real-time for a plurality of individual power sources of a multi-power source system,

using a trained allocation policy, which is trained with a reinforcement learning algorithm to optimise a predefined objective and which is parametrized by weights, to distribute power demand to the individual power sources of the multi-power source system in real-time.

With respect to what is known in the art, the invention provides the advantage that it dynamically prescribes the distribution of real-time load demand to the individual power sources according to the operative status.

For the determination of power management strategies, conventional approaches usually require processed data. For example, in batteries, such as state of charge (SOC), state of health (SOH), remaining useful lifetime (RUL) or end of discharge (EOD) data is required.

In contrast, in the present invention the power management policy can use unprocessed input data. For example, in batteries, only measurements of current and voltage data, as well as load demand data are required. This offers the distinct advantage that no further data processing step or no additional model is required.

The power management strategy implicitly learns the health state related information and/or the different dynamics of individual power sources in the power system as part of its training in the model-free reinforcement learning framework. The term "model-free" means that the strategy does not use any model information, such as battery dynamic information, battery physical parameters at deployment time, such as state of charge information.

As a result, the method is also suited to be deployed on second-life power source systems or systems comprising power sources having different dynamics and/or states of degradation.

Preferably, the predefined objective is a prolongation of the working-cycle of the deployed multi-power source system. The predefined objective may also be optimised power consumption. The invention is, however, not limited to these examples and alternative objectives are also possible within the scope of this invention.

The present method is readily scalable to an increasing number of power sources in a system, such as a number equal to or greater than four, or greater than eight, and thus an increased complexity.

Preferably, the method includes an initial training step in which training input data for a plurality of individual power sources are received and the allocation policy is trained to optimise the predefined objective on the basis of the training input data and the defined reward function. In the model-free learning framework, the policy can for example be trained to prescribe a near-optimal load allocation strategy capable of prolonging the working-cycle of the deployed system.

In a preferred aspect, the allocation policy is determined in the training step only. Different from current approaches, the allocation policy does, therefore, preferably not rely on optimization during its deployment and is not subject to further online optimization.

The training step may be performed on a physics-based system, using either a physical multi-power source system, or a simulated multi-power source system, or any operational data collected from multi-power source systems. The training step may also be performed using a surrogate deep neural network model to provide training input data.

The training step is, however, not limited to these training environments and other suitable environments and models may be used for the provision of training input data.

In a preferred aspect, a power management problem, which is a computer-implemented method for power management, is defined according to the predefined objective. Preferably, the power management problem is modelled as a Markov Decision Process (MDP).

The power management problem, which is preferably modelled as a MDP, is trained by a model-free reinforcement learning framework to optimise the power allocation policy. Different from rule-based approaches, the method disclosed in this invention targets a global maximum.

The power allocation policy preferably performs in a continuous action and state space. Ideally, the allocation policy is parameterized as a Dirichlet distribution.

The standard Gaussian distribution, which is widely used for classical control tasks and conventional reinforcement learning frameworks, is not suitable for parametrization of the power allocation policy. This is due to the fact that Gaussian distribution is not adapted for continuous allocation tasks.

Allocation tasks involve two specific constraints. Firstly, each dimension of an action $a$ performed at a time $t$ is generally bounded by the physical constraint of the allocation weights $l$, $l_k \in [0,1]$, such that $a_t = [l_1, l_2 ... l_n]$. Each dimension of an action $a_t$ represents the percentage of the load demand assigned to the corresponding source in the system. A second inherent constraint of an allocation task is that the sum of the load must be 1, which is the $\sum_{i=0}^{N} a_i = 1$ constraint.

The two constraints could potentially be satisfied by incorporating a softmax function with the Gaussian policy. However, this approach would render reinforcement learning unstable due to the injective property of softmax operation.

Conventional reinforcement learning frameworks are, therefore, not suitable for continuous allocation tasks. Methods based on these frameworks or algorithms deliver unstable and/or suboptimal results. These methods are insufficient to adjust to increased complexity of systems having a large number of sources.

The present invention sets out to overcome these deficiencies. In a preferred embodiment, the present invention introduces Dirichlet distribution as a basis for the allocation policy. This approach has never been used or suggested in this context before.

Remarkably, when tested, the Dirichlet distribution approach proved to be not only reliable but also scalable to more sources system, e.g. to eight power sources. It proved, furthermore, to be readily transferable to systems with different degradation dynamics, including degraded battery systems with different degradation dynamics.

The performed experiments found the Dirichlet policy to be bias-free and to converge faster than Gaussian distribution. This results in a faster training process and in a better performance of the allocation policy.

Hence, the allocation policy of this invention is preferably parametrized by a Dirichlet distribution, which does not suffer from boundary effects and satisfies the $\sum_{i=0}^{N} a_i = 1$ constraints.

The parametrized Dirichlet-based policy offers the advantage that it enables an efficient optimization of allocation actions in a continuous action space. One of the specific characteristics of allocation tasks is that the actions need to be a simplex. While it is possible to address the power allocation problem with a discrete action space, this would require defining different combinations of the allocation weights for each of the dimensions. When scaling it up, it usually results in an exploding action space. In addition, formulation of tasks with discrete action or state spaces results in relatively coarse decisions. This leads to sub-optimal solutions.

For this reason, in a preferred embodiment of the present invention, the allocation problem is formulated in a fine-grid continuous action space. In this embodiment, an actor-critic architecture is preferably adopted, wherein the actor is the allocation policy network which samples an action from the network output and the critic estimates the discounted return by a Q-value and guides the update of the actor. The Q-value is a measure of the overall expected reward r assuming the allocation policy is in state s and performs action a. In this actor-critic framework, every action yields a reward. Throughout the training step, the allocation policy aims to maximise the cumulative reward.

The reward is preferably designed to encourage the allocation policy to prolong the working cycle of the deployed system.

To further improve the reinforcement learning efficiency, an auxiliary reward may be introduced. In an exemplary embodiment, the allocation policy is improved using an auxiliary reward inspired by the curriculum learning. At the beginning of the learning process, the reward should be kept simple. As the performance of the allocation policy improves, the bonus signal should be updated to encourage a better but more difficult performance, which accelerates the learning process.

Preferably, the allocation policy is improved using information pertaining to the status of a system at a given time t before the action ($s_t$), the action taken ($a_t$), the status of the system after the action ($s_{t+1}$), and the reward received ($r_t$).

Previously described approaches for multi-power source management systems are based on descriptive and/or predictive analytics. The framework disclosed in this invention is one step ahead of these approaches for multi-power source management systems, as it learns a power management strategy and prescribes an optimal load allocation based on the trained policy, directly, preferably on the basis of unprocessed data, in an end-to-end way. As a result, the allocation strategy does not rely on future load profile prediction and/or online optimization.

Currently applied power management strategies are not able to be applied directly on raw measurements, without any additional state of charge calculations. These strategies rely on processed input data or on model information. In contrast, the power management system described is preferably configured such that it does not use any model information, such as battery dynamic information, or battery physical parameters at deployment time, for example SOC information.

Moreover, different from the present allocation strategy presented herein, conventional strategies do not take the SOH and different system dynamics into account. As mentioned above, the trained allocation policy of this invention is capable of implicitly learning the SOH and battery dynamics.

The multi-power source system is not particularly limited to any specific type of individual power source. It may for example comprise at least two distinct types of power sources, such as an ultra-capacitor and a fuel cell and/or a battery, a fuel cell and a battery, or different types of batteries, for example a Lithium-Ion battery and a Nickel Iron battery.

However, the multi-power source system may also comprise only one type of power source. In other words, all of the individual power sources of the system may be of the same type. It may, for example, be a multi-battery system, such as a multi-battery pack.

This invention, furthermore, pertains to a device having a plurality of sources comprising a processor configured to perform the method described above.

The invention also pertains to a computer program product containing instructions for performing the steps of the above-described method such that the computer program product, when loaded on a computerised system or a computer, allows the computerised system or the computer to perform the steps of this method.

While the proposed model-free reinforcement learning framework has been described for use in power management, the method is not limited to this application. It will be obvious to the skilled person that the proposed method is universally applicable to different types of allocation tasks, including portfolio or risk allocation tasks.

## Short description of the drawings

A preferred embodiment of the invention is disclosed in the description and illustrated by the drawings in which:

**Figure 1** schematically presents an overview of a preferred multi-power source management system of the present invention;

**Figure 2** is a schematic presentation of a preferred training step of an exemplary load allocation framework of the present invention;

**Figure 3A** is a diagram comparing the average performance with random load profiles of the preferred embodiment of this invention (RL) to rule-based approaches (Rules 1 to 4) and the equilibrium approach (baseline, BL);

**Figure 3B** is a diagram comparing the average performance with high load (80%-100% of the maximal load) profiles of the preferred embodiment of this invention (RL) to rule-based approaches (Rules 1 to 4) and BL approach;

**Figure 4A** is a comparison of the operational voltage trajectories of four individual batteries, comparing the RL approach to the rule-based approach (Rules 1 to 4) and the BL approach;

**Figure 4B** is a comparison of the allocation weights trajectories of four individual batteries, comparing the RL approach to the rule-based approach (Rules 1 to 4) and the BL approach;

**Figure 5A** shows different discharge curves of four individual batteries (A to D). Each of the four batteries has a different degradation dynamic. However, all of the batteries have the same state initialization and are operated under the same load prolife.

**Figure 5B** shows randomly picked operational voltage trajectories of four second-life batteries (B1, B2, B3 and B4), on which either the BL approach or the RL method of this invention was applied.

**Figure 6** shows the operational voltage of individual batteries of an eight battery system case study, the RL method of this preferred embodiment is compared with the BL approach;

**Example of an embodiment of the present invention**

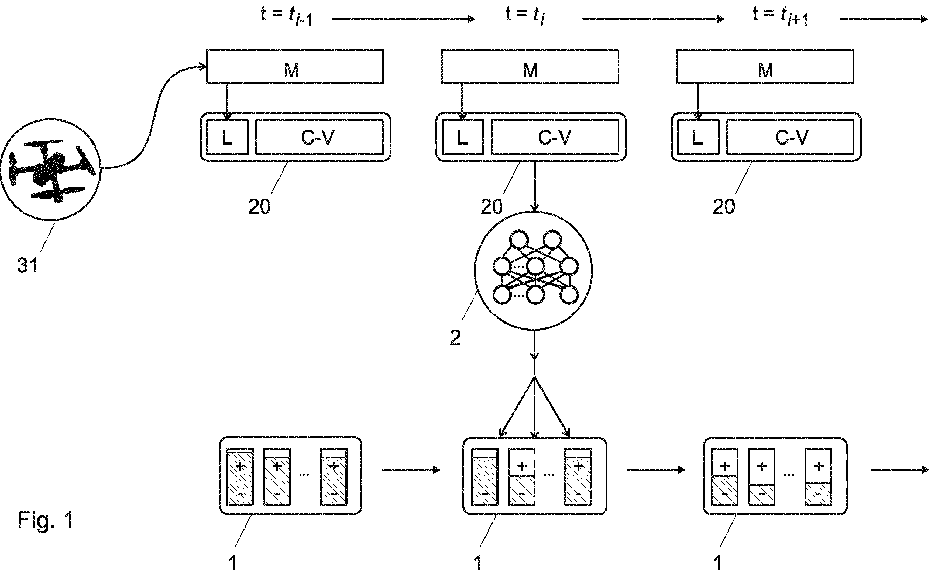

With reference to Figure 1, a preferred embodiment of the multi-power source system 31, powering for example a drone, is presented schematically. The real-time manoeuvre M of the device 31 results in a load demand L at a time $t_i$. Unprocessed measurements pertaining to the status s of each source in the system 1 are received at time $t_i$. In this case, these data are preferably current and voltage measurements data C-V. Together the load demand L and the current-voltage data C-V are the input data 20. Based on the input data 20 the allocation policy 2, which is preferably a Dirichlet policy D, prescribes the allocation weights of each power source. During training, the allocation policy is implicitly learning the health-related information such as SOC, SOH, RUL, enabling it to prescribe a near-optimal power management strategy at the end of the training step.

Following the initial training, respectively during its deployment, the trained allocation policy 2, which is the power management strategy, prescribes the allocation weights to each individual power source in real-time. Power demand is allocated to the individual power sources according to current power demand and the current status of the individual power sources. The allocation policy 2, respectively the power management strategy, assigns a percentage of the load demand to an individual power source $k$ of the system, based on the status of this power source $s_k$. The allocation policy distributes the load accordingly.

In one preferred aspect of the method presented in Figure 1, the overall objective of the allocation is a prolongation of the working cycle of the deployed system. The allocation policy is, therefore, trained to maximize the working cycle of the deployed multi-power source system 1.

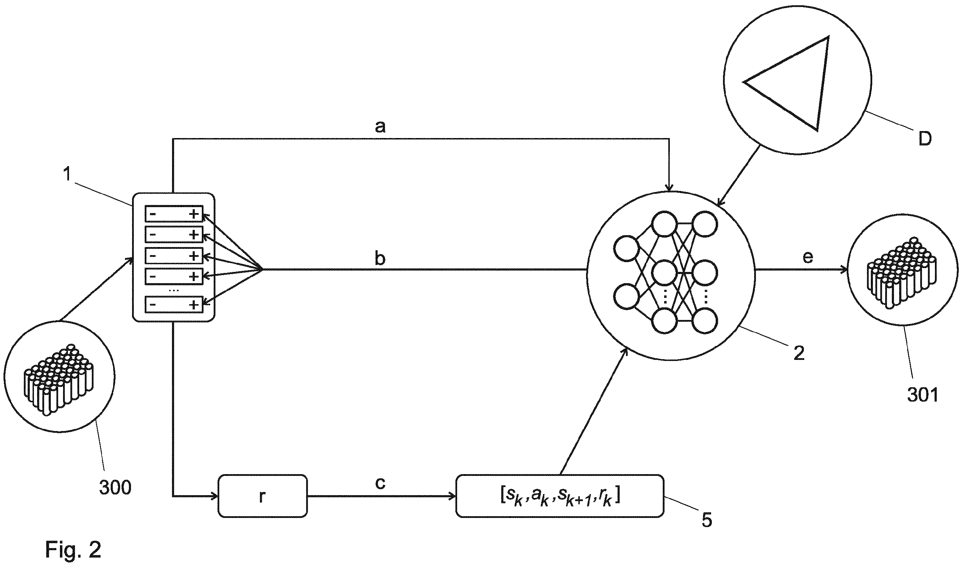

Figure 2 depicts schematically the preferred training step of the allocation policy 2, which is subsequently deployed in step e.

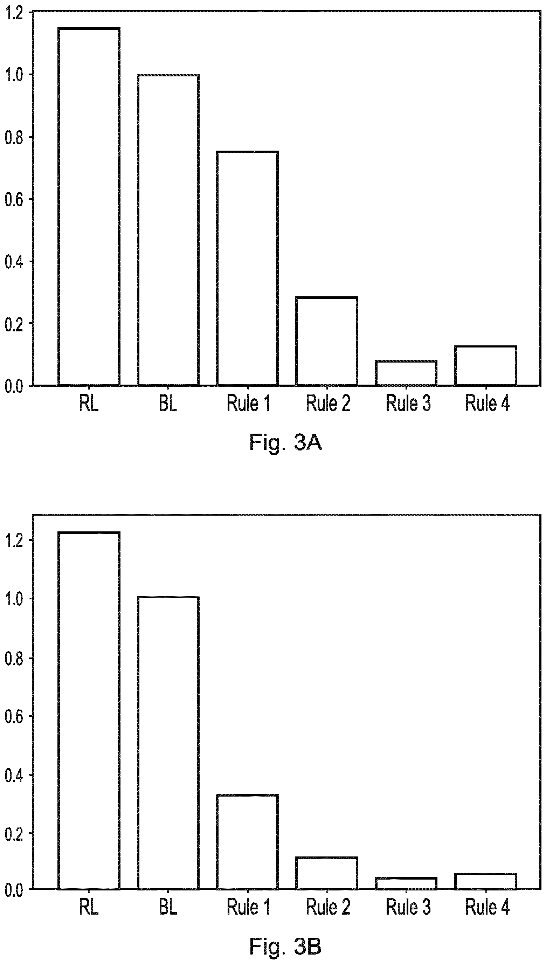

In a possible aspect of the invention, the allocation policy 2 is trained using a computational model, for example in a simulation environment. The reinforcement learning network results shown in Figures 3A to 6B of this invention are based on a Dirichlet Munchausen soft actor-critic (M-SAC) framework, which was trained in a simulation environment.

The simulation environment was a multi-battery system 300, comprising several Lithium-Ion batteries systems where the load is allocated at the level of a single battery cell and where no cell balancing is performed. The computational model from the NASA (National Aeronautics and Space Administration, US) prognostic library was used. For training process, system state were randomly sampled as initial states $s_0$ for any new episode. In addition, a Munchausen Reinforcement Learning (M-RL) under continuous action space setting was adopted to accelerate the learning process.

Further to the multi-battery systems in their first life applications, batteries in their second life applications were tested as well.

The allocation policy was parametrized by a Dirichlet distribution,

$$\pi_\theta(a|s) = \frac{1}{B(\alpha)} \prod_{i=1}^{K} a_i^{\alpha_i - 1}$$

where $B(\alpha)$ denotes the multivariate beta function and can be expressed in terms of the gamma function $\Gamma$ as following,

$$B(\alpha) = \frac{\prod_{i=1}^{K} \Gamma(\alpha_i)}{\Gamma(\sum_{i=1}^{K} \alpha_i)}.$$

Here, the distribution is shaped by the shape parameters a, which is the output of the actor neural network $f\theta(s)$. Thus, the policy is eventually determined by $\theta$.

The inventors showed that the Dirichlet policy is bias-free and that it provides significantly faster convergence compared to the Gaussian-softmax policy. As it is suited for allocation tasks performed in continuous action spaces, and does not suffer from boundary effects, it proved to be well adapted power management for multi-power source systems.

Whilst the usefulness of the proposed policy was only demonstrated for power management for multi-power source systems with different degradation dynamics, the results of this invention suggest that the policy can be readily applied to other allocation problems, such as, for example,

$$J(\pi) = \mathbb{E}_{\mathcal{D}}\left[\beta\left[\log(\pi_\theta(f_\theta(\varepsilon,s)|s))\right] - Q(s,f_\theta(\varepsilon,s))\right]$$

portfolio or risk allocation.

The off-policy reinforcement learning algorithm used to obtain the results shown in the figures was a Dirichlet M-SAC. This M-SAC was based on the maximum entropy reinforcement learning framework, with an objective to maximise both the entropy of the policy and the cumulative return.

The Dirichlet M-SAC significantly increased training stability and improves exploration during training. Surprisingly, it proved to be 10 times to 100 times more data-efficient compared to on-policy algorithms.

For reinforcement learning of the critic, the objective function was defined as:

$$J(Q) = \mathbb{E}_{(s,a)\sim\mathcal{D}}\left[\frac{1}{2}(Q(s,a) - Q_{target}(s,a))^\kappa\right]$$

where $Q_{target}$ is the approximation target for

$$Q_{target}(s,a) = R(s,a) + \lambda\beta\log\pi(a|s) + \gamma[Q_{target}(s',f(\varepsilon,s')) - \beta\log\pi(a'|s')]$$

The objective function of the policy network is given by:

$$J(\pi) = \mathbb{E}_{\mathcal{D}}\left[\beta\left[\log(\pi_\theta(f_\theta(\varepsilon,s)|s))\right] - Q(s,f_\theta(\varepsilon,s))\right]$$

where $\pi_\vartheta$ is parameterized by a neural network $f_\vartheta$, $\varepsilon$ is an input vector, and the $D = \{(s,a,s'r)\}$ is the replay buffer for storing the MDP tuples. $\beta$ is a positive Lagrange multiplier that controls the relative importance of the policy entropy versus the cumulative return.

In the preferred training step, the status $s_k$ of an individual power source $k$ is determined at a time $t$ on the basis of its operating raw measurements of current and voltage which are received by the allocation policy, as indicated in step a in Figure 2. The allocation policy also receives the load demand.

As indicated above, in the present example the multi-battery system 1 is based on a computational model. The system may however also be trained on a real multi-battery system or using past performance data from other strategies. The training step is not limited to a simulated environment.

In this example, the allocation problem was formulated as a Markov Decision Process (MDP).

At time t, the allocation policy gives and action $a_k$ based on the observed state $s_k$ of a source, step b Figure 2. The policy will receive a reward $r$ from performing the action $a_k$. The objective was encoded by designing $r=1$ when all the sources in the system are still operative.

Given a discount factor $\gamma < 1$, an optimal allocation strategy maximises the expected discount sum of future rewards, or "returns":

$$R_\tau = \mathbb{E}\left[\sum_{t=0}^{\inf}\gamma^t r(s_t,a_t)|s_0 = s\right]$$

where E indicates the expected value, $s_t$ indicates the status of a system at time $t$ and $a_t$ indicates the action at a time $t$. $R_s$ characterizes the long-term value of the allocation strategy from an initial state onwards.

To further improve the learning efficiency an auxiliary reward was introduced. At the end of each episode, the allocation policy was given an additional bonus based on the remaining voltage in the batteries. The reward was designed as:

$$r = (-num + bonus_1) * \frac{\sum_{i=1}^{i=num} var_i}{bonus_1{}^2 + 1} + \frac{bonus_2{}^2}{\sum_{i=1}^{i=num} var_i + \varepsilon}$$

where $num$ is the number of batteries in a multi-battery system and $bonus_1$ is the number of batteries (excluding the one that reached the EOD) with less than 20% voltage to EOD, $bonus_2$ is the number of batteries (excluding the one that reached EOD) with less than 10% voltage to EOD, $var = (voltage - EOD)^2$ and $\varepsilon = 0.01$ for numerical stability.

The MDP tuple $[s_k, a_k, s_{k+1}, r_k]$ were saved in a memory buffer 5, step c Figure 2, from which the policy network sampled off-policy memories to update the policy. $s_{k+1}$ indicates the status of a system after the action was performed.

Following completion of the training the allocation policy was deployed, step e Figure 2, on a real system 301, in this case a multi-battery system.

Figures 3A to 6 show experimental results obtained using the system described in the previous paragraphs.

The trained allocation strategy was evaluated on 5000 different initializations and random load profiles and compared to a baseline strategy. In Figures 3A and 3B the performance of average length of working-cycle of the baseline strategy was defined as 1, other strategies were compared to the baseline (BL). The BL strategy is an equal distribution strategy, where power is distributed equally between all the sources of a system.

The proposed Dirichlet M-SAC framework showed a 15.2% improvement on average over all test cases. For cases with high load demand the proposed reinforcement learning strategy RL resulted in 22.9% improved performance on average over all test cases, as shown in Figures 3a and 3b. High load demand as used herein means demands for 80% to 100% of the maximum load.

As shown in Figures 3A and 3B, the RL strategy was also compared to four different rule-based allocation strategies, designated as Rule 1, Rule 2, Rule 3 and Rule 4. The y-axis in these diagrams represents the values of the ratio between a strategy and the BL, while the x-axis places the corresponding strategies. The tested rules were defined based on voltage information with the objective to prolong the time of the EOD, i.e. the work cycle.

Figure 3A shows the test results of all test cases. Figure 3B shows the test results of high load profile cases only. High load profile cases are cases with a power demand from 80% to 100% of maximum power.

The results clearly demonstrate, that the RL strategy is robust under different load profiles and performs better than the other approaches. Compared to the BL strategy, the RL strategy prolongs the working cycle by 15.2% on average. In cases with high load demand the RL strategy demonstrated an even more pronounced improvement of 22.9% over the BL approach.

In these experiments the designed rule-based approaches in particular demonstrated an insufficient performance, which also shows the challenge on end-to-end power management. To improve their performance, the rules would need to be adjusted manually to specific conditions. In contrast, the proposed RL method learns the optimal allocation strategy for all conditions and copes very well with changes.

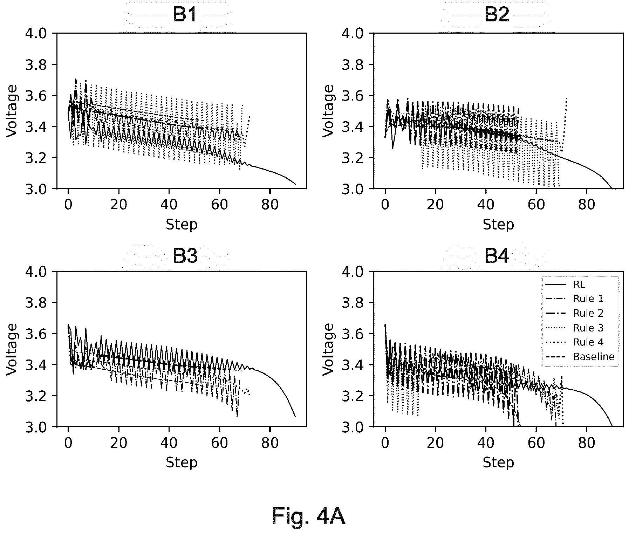

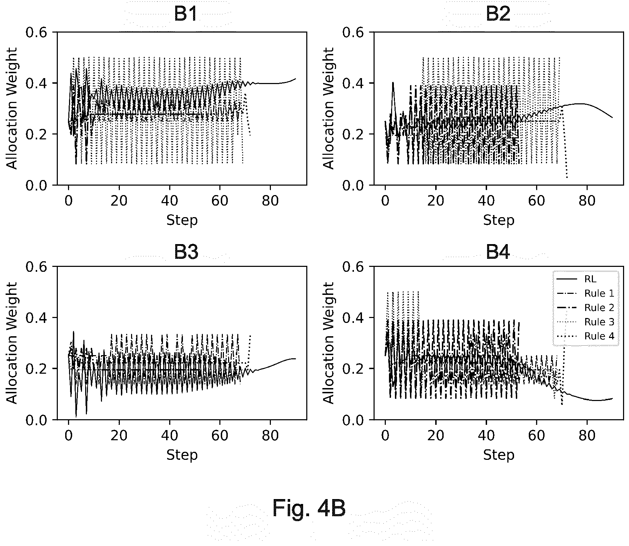

The performance of the same allocation strategies was assessed on individual batteries B1, B2, B3, B4 in a multi-battery system. The obtained data are presented in Figures 4A and 4B. The x-axes in Figures 4A and 4B represent the decision steps. The y-axis in Figure 4A represents the observed operational voltage. The y-axis in Figure 4B represents the weight allocated to the individual battery.

In Figure 4A the state trajectories of individual batteries, which received allocated power according to the different allocation strategies, were compared. The RL strategy clearly succeeded in prolonging the working cycle of the individual batteries compared to the other approaches tested. All individual batteries reached their EOD at almost the same time.

In Figure 4B the action trajectory of individual batteries, which received charges according to the different allocation strategies, were compared. Compared to the other strategies, the RL strategy showed a more stable and smoother allocation profile.

One major challenge for a power management strategy is its transferability. To evaluate the transferability to systems with different degradation dynamics, second-life batteries were tested. The dynamics of second life-systems are typically determined by their usage profile of their individual batteries in their first life, which may be very different for each individual battery.

In order to reduce life cycle costs and to improve the sustainability of the batteries, various second-life applications have been proposed. The batteries that do not meet the requirements of, e.g., automotive applications still have good energy storage capacity and can be used in less demanding second-life applications.

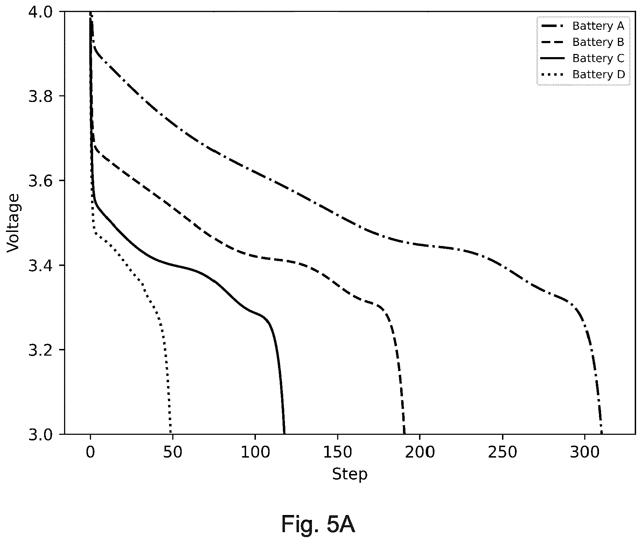

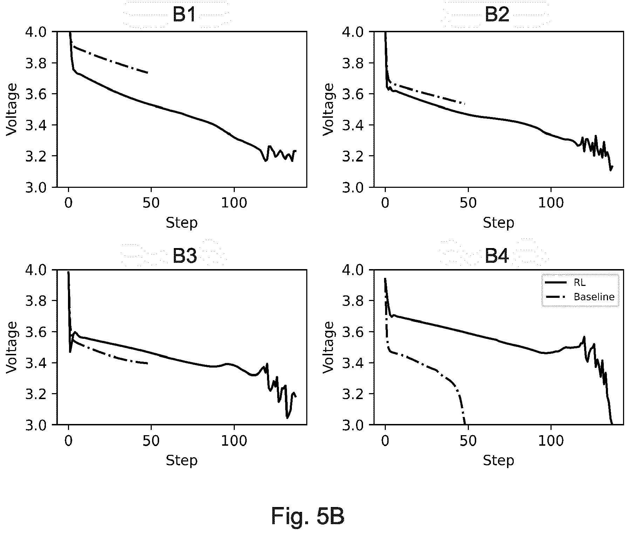

However, due to the different usage profiles from the first life, the discharge dynamics of second-life batteries can vary significantly, as shown in Figures 5A and 5B. In these diagrams the y-axis represents the observed operational voltage of the corresponding second-life batteries, while the x-axis represents the decision making steps.

Figure 5A shows voltage trajectories of four second-life batteries, A, B, C and D. Even under the same state initialization and same load profile, the discharge curves of these batteries vary significantly. In general, second-life battery systems comprising batteries with dissimilar degradation dynamics reach the EOD state much earlier.

Figure 5B shows randomly picked trajectories of second life batteries, which were subjected to the BL approach and to the RL approach disclosed herein. The RL policy significantly prolonged the working cycle of the deployed second-life battery cases. In over 5000 different random initializations and random load profiles tested the working life cycle the RL approach disclosed herein was on average prolonged by 151% compared to equal load distribution, i.e. the BL. The RL approach demonstrated even more potential in systems with different power source dynamics and cases with high load scenarios or degraded assets.

Scalability is an essential requirement for power management strategies. While an equal distribution strategy can be applied to any number of sources in a multi-power source system, rule-based approaches show substantial limitations in terms of scalability, since the number of required rules need to re-designed when the number of power sources increases.

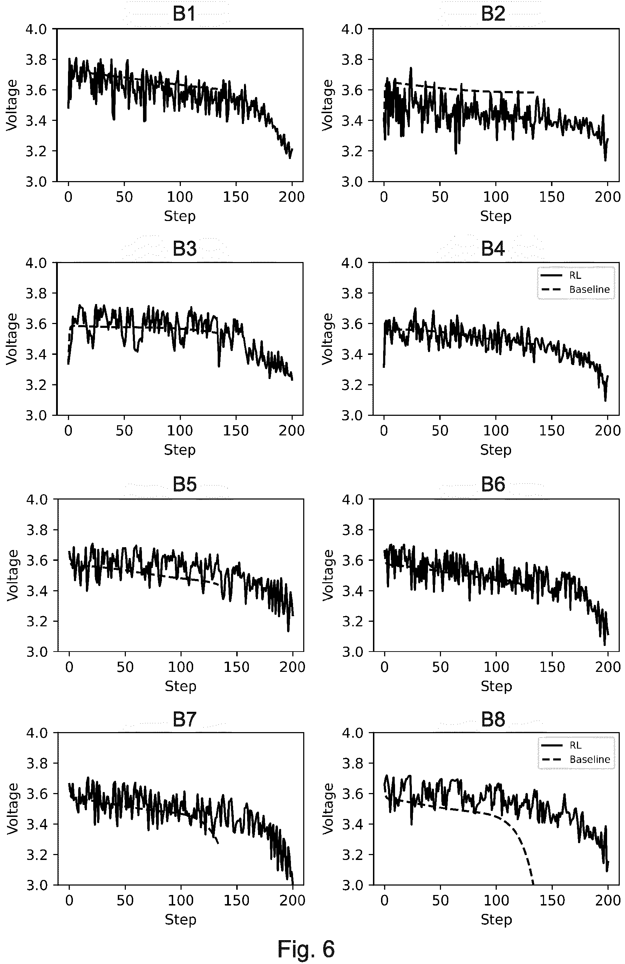

To test the scalability of proposed strategy, the multi-battery system was increased from four to eight individual Lithium-Ion batteries. The experimental setup was the same as for the tests on the four-battery system. The test results are shown in Figure 6.

In Figure 6 the performance of the RL approached proposed herein was compared to the BL method, i.e. the equal distribution policy. As for the four-battery system, the RL approach showed a superior performance compared to the BL approach. Remarkably, the performance improvement was even more pronounced in this more complex battery system than in the four-battery pack.

The lifetime of the eight-battery system was extended by 31.9% on average when the RL approach was chosen over the BL approach.

Importantly, similar to the four-battery system, the individual batteries of the eight-battery system (B1 to B8) reach their EOD almost simultaneously when the RL approach is applied. No early drop-outs were observed. This contributes crucially to the longer life-cycle of the deployed system.

In the series of experiments presented herein the proposed RL approach has been proven to be remarkably effective, scalable, transferable and capable of extending the working cycle of multi-power source system. In all these characteristics the method disclosed in this invention performed significantly better than any rule-based or baseline approaches tested under the same conditions.

Whilst there has been described in the foregoing description preferred embodiments of the present invention, it will be understood by those skilled in the technology concerned that many variations or modifications in details of design or construction may be made without departing from the present invention.

**Claims**

1. A computer-implemented method for power management for multi-power source systems using reinforcement learning, comprising the steps of

   - receiving input data (20) in real-time for a plurality of individual power sources of a multi-power source system (1),
   - using a trained allocation policy (2), which is trained with a reinforcement learning algorithm to optimise a predefined objective and which is parametrized by weights, to distribute power demand to the individual power sources of the multi-power source system (1) in real-time.

2. The computer-implemented method for power management further to claim 1, further including an initial training step comprising

   - receiving training input data (20) for a plurality of individual power sources,
   - training the allocation policy (2) with a reinforcement learning algorithm on the basis of the training input data to optimise the predefined objective.

3. The computer-implemented method for power management further to claims 1 or 2, wherein a power management problem is defined according to the predefined objective and wherein the power management problem is modelled as a Markov Decision Process.

4. The computer-implemented method for power management further to any of claims 1 to 3, wherein the allocation policy performs in a continuous action and state space.

5. The computer-implemented method for power management further to any of claims 1 to 4, wherein the allocation policy (2) is a parametrized Dirichlet distribution (D).

6. The computer-implemented method for power management further to any of claims 1 to 5, wherein the allocation policy is model-free.

7. The computer-implemented method for power management further to any of claims 1 to 6, wherein the allocation policy is determined in the training step only and is not subject to further online optimization.

8. The computer-implemented method for power management further to any of claims 1 to 7, wherein the input data, including the training input data, are unprocessed data, for example for a multi-battery systems the input data may consist of operating voltage and operating current data (V-I) as well as the real-time load demand data (P).

9. The computer-implemented method for power management further to any of claims 1 to 8, wherein the allocation policy is improved on the basis of training data pertaining to the status of all individual power sources of a multi-power source system before the action ($s_t$), the action taken ($a_t$), the status of all the individual power sources of the multi-power source system after the action ($s_{t+1}$), and a reward received ($r_t$).

10. The computer-implemented method for power management further to any of claims 1 to 9, wherein the reinforcement learning algorithm is configured to implicitly learn the different dynamics of individual power sources in the power source system, such that the method can be deployed on second-life power source systems or systems comprising power sources having different dynamics and/or states of degradation.

11. The computer-implemented method for power management further to any of claims 1 to 10, wherein the multi-power source system comprises at least two distinct types of power sources, such as an ultra-capacitor and a fuel cell and/or a battery, a fuel cell and a battery, or different types of batteries, for example a Lithium-Ion battery and a Nickel Iron battery.

12. The computer-implemented method for load allocation further to any of claims 1 to 11, wherein the power source system is a multi-battery system, for example a multi-battery pack.

13. The computer-implemented method for load allocation further to any of claims 1 to 12, wherein the allocation policy is trained using a deep neural network model.

14. A device having a plurality of power sources comprising a processor configured to perform the method of claims 1 to 13.

15. A computer program product which contains instructions for performing the steps of the method of claims 1 to 14, which, when loaded on a computerised system or a computer, allows the computerised system or the computer to perform the steps of the method.

Fig. 1

Fig. 2

Fig. 3A

Fig. 3B

Fig. 4A

Fig. 4B

Fig. 5A

Fig. 5B

Fig. 6

Europäisches
Patentamt

European
Patent Office

Office européen
des brevets

**EUROPEAN SEARCH REPORT**

Application Number

EP 21 16 3029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAOUI HICHAM ET AL: "Deep Reinforcement Learning Energy Management System for Multiple Battery Based Electric Vehicles", 2018 IEEE VEHICLE POWER AND PROPULSION CONFERENCE (VPPC), IEEE, 27 August 2018 (2018-08-27), pages 1-6, XP033495870, DOI: 10.1109/VPPC.2018.8605023 [retrieved on 2019-01-07] * abstract * * figure 1 * * Sections III, IV and V * | 1-15 | INV. H01M10/42 H01M10/44 H01M16/00 B60L58/18 H02J1/10 H02J7/00 G06N3/00 G06N3/08 G06N7/00 H01M10/48 |
| X | SUN HAOCHEN ET AL: "Data-driven reinforcement-learning-based hierarchical energy management strategy for fuel cell/battery/ultracapacitor hybrid electric vehicles", JOURNAL OF POWER SOURCES, ELSEVIER SA, CH, vol. 455, 4 March 2020 (2020-03-04), XP086102224, ISSN: 0378-7753, DOI: 10.1016/J.JPOWSOUR.2020.227964 [retrieved on 2020-03-04] * page 3 * * figure 3 * * section 4: "Learning for Markov Chain models and Q-learning algorithm" * | 1-4, 6-11, 13-15 | |
| A | ERIC ANDR\'E ET AL: "Dirichlet policies for reinforced factor portfolios", ARXIV.ORG, 12 November 2020 (2020-11-12), XP081811200, * page 2, paragraph 2 - paragraph 5 * * section 2.4: Dirichlet policies * | 5 | TECHNICAL FIELDS SEARCHED (IPC) H01M B60L H02J |

-/--

The present search report has been drawn up for all claims

| Place of search | Date of completion of the search | Examiner |
|---|---|---|
| The Hague | 13 August 2021 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 16 3029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHAOUI HICHAM ET AL: "State of Charge and State of Health Estimation for Lithium Batteries Using Recurrent Neural Networks", IEEE TRANSACTIONS ON VEHICULAR TECHNOLOGY, vol. 66, no. 10, 1 October 2017 (2017-10-01), pages 8773-8783, XP055831934, US ISSN: 0018-9545, DOI: 10.1109/TVT.2017.2715333 * the whole document * ----- | 8,10,12 | |

**TECHNICAL FIELDS SEARCHED (IPC)**

The present search report has been drawn up for all claims

| Place of search | Date of completion of the search | Examiner |
|---|---|---|
| The Hague | 13 August 2021 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3262734 B1

**Non-patent literature cited in the description**

- **YU SUI ; SHIMING SONG.** *Energies,* 2020, vol. 13, 1982

- **XIONG RUI et al.** *Applied Energy,* 2018, vol. 211, 538-548